# EUROPEAN PATENT APPLICATION

(11) **EP 4 102 481 A1**
(43) Date of publication of application: **14.12.2022**
(21) Application number: 22177949.9
(22) Date of filing: 08.06.2022
(51) Int. Cl.: G08G 1/01, G08G 1/0967, G08G 1/16, B60W 50/14, B60W 30/09, B60W 30/095

(54) **METHOD AND APPARATUS FOR CONTROLLING VEHICLE, DEVICE, MEDIUM, AND PROGRAM PRODUCT**

(30) Priority: 11.06.2021 CN 202110652259
(71) Applicant: Apollo Intelligent Connectivity (Beijing) Technology Co., Ltd., Beijing 100176 (CN)
(72) Inventor: ZHOU, Yi, Beijing, 100176 (CN); CHEN, Zhen, Beijing, 100176 (CN)
(74) Representative: Gill Jennings & Every LLP

(57) **Abstract**

The present disclosure provides a method for controlling a vehicle, an apparatus for controlling a vehicle, a device, a medium, and a program product, and relates to the field of artificial intelligence, such as deep learning, autonomous driving, and intelligent transport. An embodiment of the method includes: acquiring a traffic parameter of a target vehicle and traffic parameters of other vehicles; inputting the traffic parameter of the target vehicle into a pre-trained behavior predicting model to obtain a predicted behavior; determining a matching target driving behavior based on the traffic parameter of the target vehicle and the traffic parameters of the other vehicles; and controlling, in response to the predicted behavior mismatching the target driving behavior, the target vehicle to travel in accordance with a traffic parameter of the target driving behavior.

## Description

### TECHNICAL FIELD

Embodiments of the present disclosure relates to the field of computers, specifically to the field of artificial intelligence such as deep learning, autonomous driving, and intelligent transport, and more specifically to a method for controlling a vehicle, an apparatus for controlling a vehicle, a device, a medium, and a program product.

### BACKGROUND

With the continuous increase of the number of vehicles, congestion and traffic accidents are also increasing, and the huge traffic pressure has seriously affected people's daily life. At present, there is an urgent need for a method to control vehicle traveling, so as to alleviate the traffic pressure.

### SUMMARY

Embodiments of the present disclosure present a method for controlling a vehicle, an apparatus for controlling vehicle, a device, a medium, and a program product.

In a first aspect, an embodiment of the present disclosure presents a method for controlling a vehicle, including: acquiring a traffic parameter of a target vehicle and traffic parameters of other vehicles; inputting the traffic parameter of the target vehicle into a pre-trained behavior predicting model to obtain a predicted behavior; determining a matching target driving behavior based on the traffic parameter of the target vehicle and the traffic parameters of the other vehicles; and controlling, in response to the predicted behavior mismatching the target driving behavior, the target vehicle to travel in accordance with a traffic parameter of the target driving behavior.

In a second aspect, an embodiment of the present disclosure presents an apparatus for controlling a vehicle, including: a parameter acquiring module configured to acquire a traffic parameter of a target vehicle and traffic parameters of other vehicles; a result obtaining module configured to input the traffic parameter of the target vehicle into a pre-trained behavior predicting model to obtain a predicted behavior; a behavior determining module configured to determine a matching target driving behavior based on the traffic parameter of the target vehicle and the traffic parameters of the other vehicles; and a travel control module configured to control, in response to the predicted behavior mismatching the target driving behavior, the target vehicle to travel in accordance with a traffic parameter of the target driving behavior.

In a third aspect, an embodiment of the present disclosure presents a non-transitory computer-readable storage medium storing computer instructions, where the computer instructions cause a computer to execute the method according to the first aspect.

In a fourth aspect, an embodiment of the present disclosure presents a computer program product, including a computer program, where the computer program, when executed by a processor, implements the method according to the first aspect.

The method for controlling a vehicle, the apparatus for controlling a vehicle, the device, the medium, and the program product provided in embodiments of the present disclosure first acquire a traffic parameter of a target vehicle and traffic parameters of other vehicles; then input the traffic parameter of the target vehicle into a pre-trained behavior predicting model to obtain a predicted behavior; then determine a matching target driving behavior based on the traffic parameter of the target vehicle and the traffic parameters of the other vehicles; and finally control, in response to the predicted behavior mismatching the target driving behavior, the target vehicle to travel in accordance with a traffic parameter of the target driving behavior. It can be pre-determined whether the target vehicle can travel in accordance with the predicted behavior outputted from the behavior predicting model based on the target driving behavior determined based on the traffic parameter of the target vehicle and the traffic parameters of the other vehicles, and when the predicted behavior mismatches the target driving behavior, the target vehicle is controlled to travel in accordance with the traffic parameter of the target driving behavior (i.e., not to travel in accordance with a traffic parameter of the predicted behavior), thus avoiding possible traffic congestion and traffic accidents.

It should be understood that contents described in the SUMMARY are neither intended to identify key or important features of embodiments of the present disclosure, nor intended to limit the scope of the present disclosure. Other features of the present disclosure will become readily understood in conjunction with the following description.

### BRIEF DESCRIPTION OF THE DRAWINGS

After reading detailed descriptions of non-limiting embodiments with reference to the following accompanying drawings, other features, objectives and advantages of the present disclosure will become more apparent. The accompanying drawings are used for better understanding of the present solution, and do not constitute any limitation of the present disclosure.
Fig. 1 is a diagram of an example system architecture in which embodiments of the present disclosure may be implemented;
Fig. 2 is a flowchart of an embodiment of a method for controlling a vehicle according to the present disclosure;
Fig. 3 is a flowchart of an embodiment of a method for controlling a vehicle according to the present disclosure;
Fig. 4 is a flowchart of an embodiment of a method for controlling a vehicle according to the present disclosure;
Fig. 5 is a schematic structural diagram of an embodiment of an apparatus for controlling a vehicle according to the present disclosure; and
Fig. 6 is a block diagram of an electronic device configured to implement embodiments of the present disclosure.

### DETAILED DESCRIPTION OF EMBODIMENTS

Example embodiments of the present disclosure are described below with reference to the accompanying drawings, where various details of the embodiments of the present disclosure are included to facilitate understanding, and should be considered merely as examples. Therefore, those of ordinary skills in the art should realize that various changes and modifications can be made to the embodiments described here without departing from the scope and spirit of the present disclosure. Similarly, for clearness and conciseness, descriptions of well-known functions and structures are omitted in the following description.

It should be noted that some embodiments in the present disclosure and some features in the embodiments may be combined with each other on a non-conflict basis. The present disclosure will be described in detail below with reference to the accompanying drawings and in combination with the embodiments.

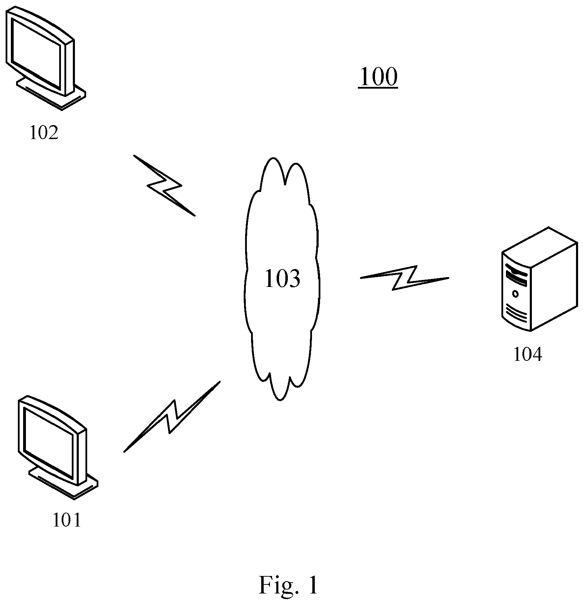

Fig. 1 shows an example system architecture 100 in which embodiments of a method for controlling a vehicle or an apparatus for controlling a vehicle according to the present disclosure may be implemented.

As shown in Fig. 1, the system architecture 100 may include a terminal device 101 corresponding to a target vehicle, a terminal device 102 corresponding to other vehicles, a network 103, and a server 104. The network 103 serves as a medium providing a communication link among the terminal device 101 corresponding to the target vehicle, the terminal device 102 corresponding to the other vehicles, and the server 104. The network 103 may include various types of connections, such as wired or wireless communication links, or optical cables.

A user may interact with the server 104 through the network 103 using the terminal device 101 corresponding to the target vehicle and the terminal device 102 corresponding to the other vehicles, to acquire, e.g., a traffic parameter of the target vehicle and traffic parameters of the other vehicles. The terminal device 101 corresponding to the target vehicle and the terminal device 102 corresponding to the other vehicles may be provided with various client applications and intelligent interactive applications, such as traffic processing applications and map software.

The terminal device 101 corresponding to the target vehicle and the terminal device 102 corresponding to the other vehicles may be hardware, or may be software. When the terminal device 101 corresponding to the target vehicle and the terminal device 102 corresponding to the other vehicles are hardware, the terminal devices may be electronic products, e.g., a PC (personal computer), a mobile phone, a smart phone, a PDA (personal digital assistant), a wearable device, a PPC (pocket PC), a tablet computer, a smart vehicle terminal, a smart TV, a smart speaker, a tablet computer, a laptop portable computer, and a desktop computer, that perform human-machine interactions with the user through one or more means, such as a keyboard, a touch panel, a display screen, a touch screen, a remote controller, or a voice interaction or handwriting device. When the terminal device 101 corresponding to the target vehicle and the terminal device 102 corresponding to the other vehicles are software, the terminal devices may be installed in the above electronic device, or may be implemented as a plurality of software programs or software modules, or may be implemented as a single software program or software module. This is not specifically limited here.

The server 104 may provide various services. For example, the server 104 may acquire a traffic parameter of the terminal device 101 corresponding to the target vehicle and traffic parameters of the terminal device 102 corresponding to the other vehicles; such that the server 104 inputs the traffic parameter of the target vehicle into a pre-trained behavior predicting model to obtain a predicted behavior, determines a matching target driving behavior based on the traffic parameter of the target vehicle and the traffic parameters of the other vehicles, and controls, in response to the predicted behavior mismatching the target driving behavior, the target vehicle to travel in accordance with a traffic parameter of the target driving behavior.

It should be noted that the server 104 may be hardware, or may be software. When the server 104 is hardware, the server may be implemented as a distributed server cluster composed of a plurality of servers, or may be implemented as a single server. When the server 104 is software, the server may be implemented as a plurality of software programs or software modules (e.g., software programs or software modules for providing distributed services), or be implemented as a single software program or software module. This is not specifically limited here.

It should be noted that the method for controlling a vehicle according to embodiments of the present disclosure is generally executed by the server 104. Accordingly, the apparatus for controlling a vehicle is generally provided in the server 104.

It should be understood that the numbers of terminal devices, network, and server in Fig. 1 are merely illustrative. Any number of terminal devices, networks, and servers may be provided based on actual requirements.

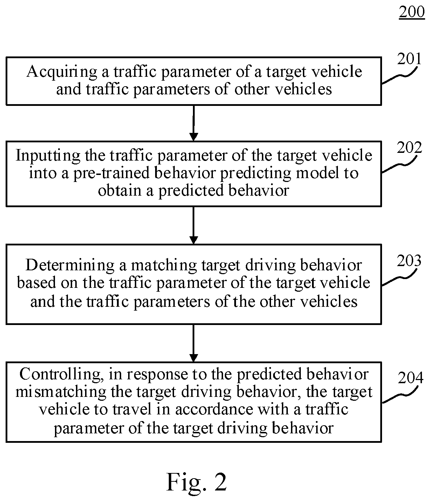

Further referring to Fig. 2, a process 200 of an embodiment of a method for controlling a vehicle according to the present disclosure is shown. The method for controlling a vehicle may include the following steps:

Step 201: acquiring a traffic parameter of a target vehicle and traffic parameters of other vehicles.

In the present embodiment, an executing body (for example, the server 104 shown in Fig. 1) of the method for controlling a vehicle may acquire the traffic parameter of the target vehicle and the traffic parameters of the other vehicles at a certain moment or within a preset time period before a certain moment. The certain moment may be any moment, for example, a current moment. The preset time period may be a time period before a certain moment. The vehicle may be an apparatus for human riding or transport, such as a bicycle, an automobile, a motorcycle, a train, a boat, or an aircraft. The other vehicles may be vehicles within a preset range of the target vehicle, and the preset range may be set based on the degree of traffic impact of the other vehicles on the target vehicle, or may be manually set. Alternatively, the target vehicle and the other vehicles may be vehicles in the same scenario, for example, a road scenario, a water scenario, or a sky scenario. The traffic parameter of the target vehicle may include a model number, a speed, and a coordinate position (or latitude and longitude). The traffic parameters of the other vehicles may include flow rates, model numbers, speeds, and coordinate positions (or latitude and longitude) of the vehicles.

Here, the traffic parameter of the target vehicle may be a traffic parameter collected by various sensors of the target vehicle; and then the traffic parameter of the target vehicle may be transferred to the executing body through the terminal device corresponding to the target vehicle (for example, the terminal device 101 corresponding to the target vehicle shown in Fig. 1); and the traffic parameters of the other vehicles may be traffic parameters collected by various sensors of the other vehicles; and then the traffic parameters of the other vehicles may be transferred to the executing body through the terminal devices corresponding to the other vehicles (such as the terminal device 102 corresponding to the other vehicles shown in Fig. 1).

It should be noted that when the target vehicle and the other vehicles are automobiles, the terminal device corresponding to the target vehicle and the terminal devices corresponding to the other vehicles may be on-board terminals.

In the present embodiment, after the traffic parameter of the target vehicle and the traffic parameters of the other vehicles are obtained, the method for controlling a vehicle may further include: establishing communication among the terminal device corresponding to the target vehicle, the terminal devices corresponding to the other vehicles, and the executing body.

In an example, the communication among the terminal device corresponding to the target vehicle, the terminal devices corresponding to the other vehicles, and the executing body may be performed via a network (for example, the network 103 shown in Fig. 1), and the network may include various types of connections, such as wired connections, Bluetooth, user datagram protocol (UDP), wireless communication links, or optical fiber cables.

In the technical solutions of the present disclosure, the acquisition, storage, and application of traffic parameters involved are in conformity with relevant laws and regulations, and does not violate public order and good customs.

Step 202: inputting the traffic parameter of the target vehicle into a pre-trained behavior predicting model to obtain a predicted behavior.

In the present embodiment, the executing body may input the traffic parameter of the target vehicle into the pre-trained behavior predicting model to obtain a predicting result corresponding to the traffic parameter of the target vehicle. The behavior predicting model may be configured to predict a behavior of the target vehicle at a next moment after a certain moment. The predicted behavior may be used for characterizing a possible traffic state of the target vehicle at the next moment after the certain moment, for example, the traffic state may be a behavior type, which may include overtaking, lane change, emergency stop, and the like.

Here, the behavior predicting model may be obtained by training based on the traffic parameter of the target vehicle and the corresponding behavior type.

Specifically, an initial model is trained with the traffic parameter of the target vehicle as an input of the behavior predicting model and the behavior type as a desired output of the behavior predicting model, to obtain the behavior predicting model.

In the present embodiment, after obtaining the traffic parameter and the behavior type of the target vehicle, the executing body may train the initial model based on the traffic parameter and the behavior type of the target vehicle, to obtain the behavior predicting model. During training, the executing body may use the traffic parameter of the target vehicle as the input of the behavior predicting model and use the behavior type corresponding to the input as the desired output to obtain the behavior predicting model. The initial model may be a neural network model in an existing technology or in a future to-be-developed technology. For example, the neural network model may include a classification model, such as random forest, lightGBM (Light Gradient Boosting Machine), and Xgboost (extreme Gradient Boosting).

Step 203: determining a matching target driving behavior based on the traffic parameter of the target vehicle and the traffic parameters of the other vehicles.

In the present embodiment, the executing body may determine the target driving behavior based on the traffic parameter of the target vehicle and the traffic parameters of the other vehicles, where target driving behavior matches the traffic parameter of the target vehicle and the traffic parameters of the other vehicles. There may be one or more types of the target driving behaviors. Alternatively, a corresponding relationship between the driving behavior, and the traffic parameter of the target vehicle and the traffic parameters of the other vehicles, may be pre-established. The target driving behavior may be a driving behavior that will not cause congestion or traffic accidents when the target vehicle travels in accordance with a traffic parameter of the target driving behavior.

It should be noted that the predicted behavior matching the target driving behavior may be that the predicted behavior is the same as one target driving behavior, or matches a plurality of target driving behaviors.

It should be noted that when there is a plurality of types of target driving behaviors, one driving behavior may be randomly selected to control the target vehicle to travel; or, one driving behavior may be selected in accordance with a preference information of a driver of the target vehicle for the driving behaviors, to control the target vehicle to travel.

Step 204: controlling, in response to the predicted behavior mismatching the target driving behavior, the target vehicle to travel in accordance with a traffic parameter of the target driving behavior.

In the present implementation, the executing body may first match the target driving behavior with the predicted behavior to obtain a matching result; and then control, when the matching result is that the predicted behavior mismatches the target driving behavior, the target vehicle to travel in accordance with the traffic parameter of the target driving behavior. The mismatching may be that none of one or more target driving behaviors match the predicted behavior.

It should be noted that step 202 and step 203 may be executed in parallel; or, step 202 may be first executed, and then step 203 may be executed; or, step 203 may be first executed, and then step 202 may be executed.

The method for controlling a vehicle provided in embodiments of the present disclosure first acquires a traffic parameter of a target vehicle and traffic parameters of other vehicles; then inputs the traffic parameter of the target vehicle into a pre-trained behavior predicting model to obtain a predicted behavior; then determines a matching target driving behavior based on the traffic parameter of the target vehicle and the traffic parameters of the other vehicles; and finally controls, in response to the predicted behavior mismatching the target driving behavior, the target vehicle to travel in accordance with a traffic parameter of the target driving behavior. It can be pre-determined whether the target vehicle can travel in accordance with the predicted behavior outputted from the behavior predicting model based on the target driving behavior determined based on the traffic parameter of the target vehicle and the traffic parameters of the other vehicles, and when the predicted behavior mismatches the target driving behavior, the target vehicle is controlled to travel in accordance with the traffic parameter of the target driving behavior (i.e., not to travel in accordance with a traffic parameter of the predicted behavior), thus avoiding possible traffic congestion and traffic accidents.

In some alternative implementations of the present embodiment, the determining the matching target driving behavior based on the traffic parameter of the target vehicle and the traffic parameters of the other vehicles includes: determining a relative traffic parameter based on the traffic parameter of the target vehicle and the traffic parameters of the other vehicles, where the relative traffic parameter is a traffic parameter between the target vehicle and the other vehicles; and determining the target driving behavior based on the traffic parameter of the target vehicle and the relative traffic parameter.

In the present implementation, the executing body may determine, based on the traffic parameter of the target vehicle and the traffic parameters of the other vehicles, the relative traffic parameter between the target vehicle and the other vehicles; and then determine the target driving behavior based on the traffic parameter of the target vehicle and the relative traffic parameter. The relative traffic parameter may be used for characterizing a relative traffic parameter between the target vehicle and the other vehicles, such as a relative distance or a relative speed.

Accordingly, in this example, the determining the target driving behavior based on the traffic parameter of the target vehicle and the relative traffic parameter may include: determining the corresponding target driving behavior based on a corresponding relationship between the traffic parameter of the target vehicle and the relative traffic parameter, and the driving behavior.

In an example, for overtaking on an urban road (i.e., a target driving behavior), if the speed of the target vehicle is lower than 40 km/h, the relative distance (i.e., the relative traffic parameter) shall be guaranteed to be at least 2 parking spaces (i.e., about 10 meter distance); if the speed of the target vehicle is from 40 to 60 km/h, the relative distance shall be guaranteed to be at least 20 meters or more; and if the speed of the target vehicle exceeds 60 km/h, the relative distance shall be kept to be at least 60 meters or more.

It should be noted that the relative traffic parameter and the traffic parameter of the target vehicle may be set based on different scenarios and/or different environments. In addition, the corresponding relationship between the target driving behavior, and the relative traffic parameter and the traffic parameter of the target vehicle, may be pre-established.

In the present implementation, the target driving behavior can be determined based on the relative traffic parameter determined based on the traffic parameter of the target vehicle and the traffic parameters of the other vehicles, and based on the traffic parameter of the target vehicle; thereby pre-determining, based on the target driving behavior, whether the target vehicle can travel in accordance with the predicted behavior outputted from the behavior predicting model, and avoiding possible traffic congestion and traffic accidents.

In some alternative implementations of the present embodiment, the method for controlling a vehicle further includes: controlling, in response to the predicted behavior matching the target driving behavior, the target vehicle travel in accordance with the traffic parameter of the predicted behavior.

In the present implementation, the executing body may first match the target driving behavior with the predicted behavior to obtain a matching result; and then control, when the matching result is that the predicted behavior matches the target driving behavior, the target vehicle to travel in accordance with the traffic parameter of the predicted behavior. The matching may be that one or more target driving behaviors match the predicted behavior. Alternatively, when the predicted behavior matches one target driving behavior, the predicted behavior may be the same as the target driving behavior.

In the present implementation, when the predicted behavior matches the target driving behavior, the driving behavior of the target vehicle (i.e., the predicted behavior) is not adjusted, and the target vehicle continues traveling in accordance with the traffic parameter of the predicted behavior.

In some alternative implementations of the present embodiment, the method for controlling a vehicle further includes: generating a corresponding reminding message based on the matching result.

In the present implementation, the executing body may generate the corresponding reminding message based on the matching result. The reminding message may be broadcasted by voice, or may be displayed on an interface of the terminal device corresponding to the target vehicle and displayed on the terminal devices corresponding to the other vehicles, or may be an alarm sound. For example, a highlighted reminding color may be displayed on the interface of the terminal device corresponding to the target vehicle. The matching result may include a corresponding result of the predicted behavior matching the target driving behavior; or a corresponding result of the predicted behavior mismatching the target driving behavior.

In the present implementation, whether the target vehicle can travel in accordance with the predicted behavior outputted from the behavior predicting model is pre-determined based on the traffic parameter of the target vehicle and the traffic parameters of the other vehicles, thereby generating the corresponding reminding message, and avoiding possible traffic congestion and traffic accidents.

In some alternative implementations of the present embodiment, the generating the corresponding reminding message based on the matching result includes any one of: generating, in response to the matching result being that the predicting result mismatches the target driving behavior, a corresponding first reminding message, where the first reminding message is used for reminding adjustment of the traffic parameter of the target vehicle to the traffic parameter of the target driving behavior; or generating, in response to the matching result being that the predicting result matches the target driving behavior, a corresponding second reminding message, where the second reminding message is used for reminding adjustment of the traffic parameter of the target vehicle to the traffic parameter of the predicted behavior.

In the present implementation, the executing body may first compare the predicted behavior with the target driving behavior; generate the first reminding message when the predicted behavior mismatches the target driving behavior; or generate the second reminding message when the predicted behavior matches the target driving behavior.

Here, the first reminding message and the second reminding message may be used for reminding the terminal device corresponding to the target vehicle and the terminal devices corresponding to the other vehicles, and users (e.g., drivers) of the target vehicle and the other vehicles to continue driving the target vehicle in accordance with the traffic parameter of the predicted behavior or not.

Specifically, in a process when a vehicle is traveling, when the predicted behavior mismatches the target driving behavior, the first reminding message may be sent to the terminal device corresponding to the target vehicle and the terminal devices corresponding to the other vehicles, to remind the target vehicle to travel in accordance with the traffic parameter of the target driving behavior, and to adjust the traffic parameter of the target vehicle to the traffic parameter of the target driving behavior; and when the predicted behavior matches the target driving behavior, the second reminding message may be sent to the terminal device corresponding to the target vehicle and the terminal devices corresponding to the other vehicles, to remind the target vehicle to travel in accordance with the predicted behavior, and to adjust the traffic parameter of the target vehicle to the traffic parameter of the predicted behavior.

Accordingly, when the traffic parameter of the target vehicle is adjusted to the traffic parameter of the predicted behavior, the traffic parameter of the target vehicle may be adjusted to the traffic parameter of the predicted behavior in stages within a preset duration.

In an example, if the predicted behavior is a driving behavior of braking, the traffic parameter of the target vehicle may be adjusted to a traffic parameter of the driving behavior of braking (for example, a current speed of the target vehicle is 0) within a preset duration (for example, 10 S). The preset duration cannot be too short, because a too short preset duration, on the one hand, will cause damage to a brake component of the target vehicle, and on the other hand, may affect the normal traveling of other vehicles behind, and even will seriously cause a traffic accident. The preset duration cannot be too long, either, because a too long preset duration may weaken the function of pre-determining the driving behavior of the target vehicle, and even will seriously cause a traffic accident. The preset duration may be set based on the relative traffic parameter and the traffic parameter of the target vehicle.

It should be noted that the first reminding message and the second reminding message may be sent by the executing body to the terminal device corresponding to the target vehicle and the terminal devices corresponding to the other vehicles; or may be sent by the terminal device corresponding to the target vehicle to the terminal devices corresponding to the other vehicles. In addition, while the first reminding message and the second reminding message are generated, a traffic parameter suitable for the target vehicle to travel (i.e., the traffic parameter of the target driving behavior) may be generated for a current traffic parameter of the target vehicle and current traffic parameters of the other vehicles.

In addition, the reminding messages are sent to the other vehicles, such that the other vehicles can accurately know about a current driving behavior of the target vehicle for the purpose of safe driving.

In the present implementation, whether the target vehicle can travel in accordance with the predicted behavior outputted from the behavior predicting model is pre-determined based on the target driving behavior determined based on the traffic parameter of the target vehicle and the traffic parameters of the other vehicles, thereby generating the corresponding reminding messages, and avoiding possible traffic congestion and traffic accidents.

In some alternative implementations of the present embodiment, the method for controlling a vehicle further includes: acquiring, in response to the target driving behavior being the driving behavior of braking, a preset braking time threshold; and controlling, in response to an estimated duration of executing the driving behavior of braking being less than the preset braking time threshold, the target vehicle to be forced to brake, where there is a corresponding relationship between the estimated duration of executing the driving behavior of braking and the traffic parameter of the target driving behavior.

In the present implementation, when the target driving behavior is the driving behavior of braking, the preset braking time threshold may be first acquired; and then, when the estimated duration of executing the driving behavior of braking is less than a braking time of the driving behavior of braking, the target vehicle may be controlled to be forced to brake. The estimated duration of executing the driving behavior of braking may be a duration between a moment when a braking operation is started and a moment when the actual braking operation takes effect (i.e., the speed of the target vehicle is 0) . The estimated duration of executing the driving behavior of braking may be acquired based on the corresponding relationship between the estimated duration of executing the driving behavior of braking and the traffic parameter of the target driving behavior.

Here, the preset braking time threshold may be dynamically acquired based on the corresponding relationship between the estimated duration of executing the driving behavior of braking and the traffic parameter of the target vehicle, thereby dynamically adjusting the braking time threshold based on different traffic parameters of the target vehicle.

In an example, if the traffic parameter of the target vehicle is 40 km/h, the corresponding braking time threshold is 2 s; and if the traffic parameter of the target vehicle is 60 km/h, the corresponding braking time threshold is 3 s.

It should be noted that a corresponding relationship between the traffic parameter of the target vehicle and the braking time threshold may be pre-established.

In the present implementation, when the estimated duration of executing the driving behavior of braking is less than the preset braking time threshold, the target vehicle is controlled to be forced to brake for the purpose of safe driving.

In some alternative implementations of the present embodiment, the method for controlling a vehicle further includes: sending the reminding messages to the other vehicles and the target vehicle in accordance with a pre-established communication mode.

In the present implementation, communication, e.g., a network (such as the network 104 shown in Fig. 1), among the target vehicle, the other vehicles, and the executing body may be pre-established; and then, the reminding messages may be sent to the other vehicles and the target vehicle.

In the present implementation, the reminding messages may be sent to the other vehicles and the target vehicle in accordance with the pre-established communication mode.

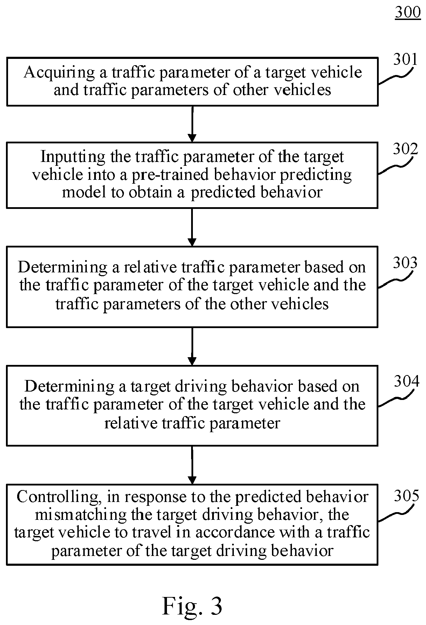

Further referring to Fig. 3, Fig. 3 shows a process 300 of an embodiment of a method for controlling a vehicle according to the present disclosure. The method for controlling a vehicle may include the following steps:
Step 301: acquiring a traffic parameter of a target vehicle and traffic parameters of other vehicles.
Step 302: inputting the traffic parameter of the target vehicle into a pre-trained behavior predicting model to obtain a predicted behavior.
Step 303: determining a relative traffic parameter based on the traffic parameter of the target vehicle and the traffic parameters of the other vehicles.

In the present embodiment, an executing body (for example, the server 104 shown in Fig. 1) of the method for controlling a vehicle may determine, based on the traffic parameter of the target vehicle and the traffic parameters of the other vehicles, the relative traffic parameter between the target vehicle and the other vehicles. The relative traffic parameter may be used for characterizing a relative traffic parameter between the target vehicle and the other vehicles, such as a relative distance or a relative speed.

Step 304: determining a target driving behavior based on the traffic parameter of the target vehicle and the relative traffic parameter.

In the present embodiment, the executing body may determine the corresponding target driving behavior based on a corresponding relationship between the traffic parameter of the target vehicle and the relative traffic parameter, and the driving behavior.

In an example, for overtaking on an urban road (i.e., a target driving behavior), if the speed of the target vehicle is lower than 40 km/h, the relative distance (i.e., the relative traffic parameter) shall be guaranteed to be at least 2 parking spaces (i.e., about 10 meter distance); if the speed of the target vehicle is from 40 to 60 km/h, the relative distance shall be guaranteed to be at least 20 meters or more; and if the speed of the target vehicle exceeds 60 km/h, the relative distance shall be kept to be at least 60 meters or more.

It should be noted that the relative traffic parameter and the traffic parameter of the target vehicle may be set based on different scenarios and/or different environments. In addition, the corresponding relationship between the target driving behavior, and the relative traffic parameter and the traffic parameter of the target vehicle, may be pre-established.

Step 305: controlling, in response to the predicted behavior mismatching the target driving behavior, the target vehicle to travel in accordance with a traffic parameter of the target driving behavior.

In the present embodiment, specific operations of steps 301, 302, and 305 are introduced in detail in steps 201, 202, and 204 in the embodiment shown in Fig. 2 respectively, and are not repeated here.

As can be seen from Fig. 3, compared with the corresponding embodiment of Fig. 2, the method for controlling a vehicle in the present embodiment highlights the step of determining the target driving behavior. Therefore, the solution described in the present embodiment determines a relative traffic parameter based on a traffic parameter of a target vehicle and traffic parameters of other vehicles; and then determines a target driving behavior based on the traffic parameter of the target vehicle and the relative traffic parameter. It can be pre-determined whether the target vehicle can travel in accordance with a traffic parameter of a predicted behavior outputted from a behavior predicting model based on the determined target driving behavior, and when the predicted behavior mismatches the target driving behavior, the target vehicle is controlled to travel in accordance with a traffic parameter of the target driving behavior (i.e., not to travel in accordance with the traffic parameter of the predicted behavior), thus avoiding possible traffic congestion and traffic accidents.

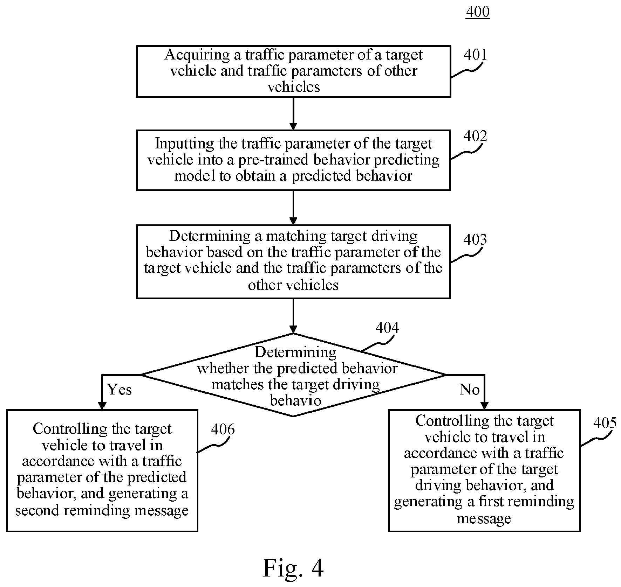

Further referring to Fig. 4, Fig. 4 shows a process 400 of an embodiment of a method for controlling a vehicle according to the present disclosure. The method for controlling a vehicle may include the following steps:
Step 401: acquiring a traffic parameter of a target vehicle and traffic parameters of other vehicles.
Step 402: inputting the traffic parameter of the target vehicle into a pre-trained behavior predicting model to obtain a predicted behavior.
Step 403: determining a matching target driving behavior based on the traffic parameter of the target vehicle and the traffic parameters of the other vehicles.
Step 404: determining whether the predicted behavior matches the target driving behavior. If the predicted behavior mismatches the target driving behavior, step 405 is executed; otherwise, step 406 is executed.
Step 405: controlling, in response to the predicted behavior mismatching the target driving behavior, the target vehicle to travel in accordance with a traffic parameter of the target driving behavior, and generating a first reminding message.

In the present embodiment, an executing body (e.g., the server 104 shown in Fig. 1) of the method for controlling a vehicle may control, when the predicted behavior mismatches the target driving behavior, the target vehicle to travel in accordance with the traffic parameter of the target driving behavior, and generate the first reminding message.

It should be noted that the step of generating the first reminding message may be executed at the same time as the step of controlling the target vehicle to travel in accordance with the traffic parameter of the target driving behavior; or the step of controlling the target vehicle to travel in accordance with the traffic parameter of the target driving behavior may be first executed; or the step of generating the first reminding message may be first executed.

Step 406: controlling, in response to the predicted behavior matching the target driving behavior, the target vehicle to travel in accordance with a traffic parameter of the predicted behavior, and generating a second reminding message.

In the present embodiment, the executing body may control, when the predicted behavior matches the target driving behavior, the target vehicle to travel in accordance with the traffic parameter of the predicted behavior, and generate the second reminding message.

It should be noted that the step of generating the second reminding message may be executed at the same time as the step of controlling the target vehicle to travel in accordance with the traffic parameter of the predicted behavior; or the step of controlling the target vehicle to travel in accordance with the traffic parameter of the predicted behavior may be first executed; or the step of generating the second reminding message may be first executed.

In the present embodiment, specific operations of steps 401 to 403 are introduced in detail in steps 201 to 203 in the embodiment shown in Fig. 2 respectively, and are not repeated here.

As can be seen from Fig. 4, compared with the corresponding embodiment of Fig. 2, the method for controlling a vehicle in the present embodiment highlights the step of generating the reminding messages. Therefore, the solution described in the present embodiment generates a corresponding reminding message as to whether the predicted behavior matches the target driving behavior; and pre-determines whether the target vehicle can travel in accordance with the predicted behavior outputted from the behavior predicting model based on the target driving behavior determined based on the traffic parameter of the target vehicle and the traffic parameters of the other vehicles, thereby generating a corresponding reminding message, and avoiding possible traffic congestion and traffic accidents.

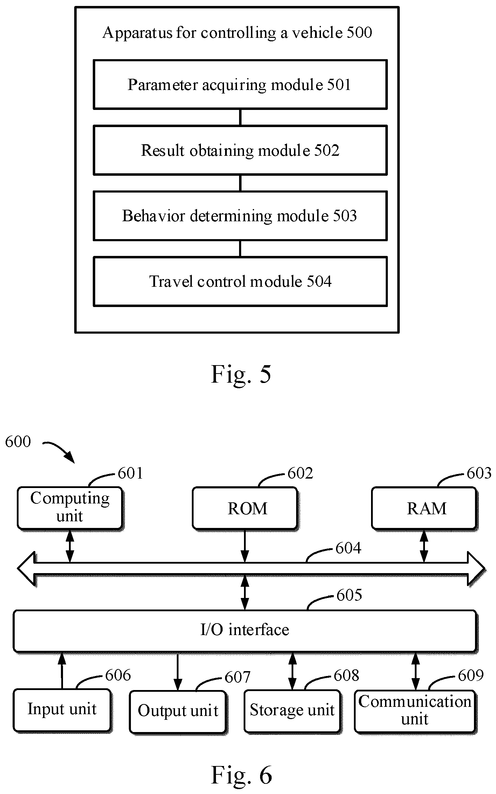

Further referring to Fig. 5, as an implementation of the method shown in the above figures, an embodiment of the present disclosure provides a schematic structural diagram of an apparatus for controlling a vehicle. The embodiment of the apparatus corresponds to the embodiment of the method shown in Fig. 2, and the apparatus may be specifically applied to various electronic devices.

As shown in Fig. 5, the apparatus 500 for controlling a vehicle of the present embodiment may include: a parameter acquiring module 501, a result obtaining module 502, a behavior determining module 503, and a travel control module 504. The parameter acquiring module 501 is configured to acquire a traffic parameter of a target vehicle and traffic parameters of other vehicles; the result obtaining module 502 is configured to input the traffic parameter of the target vehicle into a pre-trained behavior predicting model to obtain a predicted behavior; the behavior determining module 503 is configured to determine a matching target driving behavior based on the traffic parameter of the target vehicle and the traffic parameters of the other vehicles; and the travel control module 504 is configured to control, in response to the predicted behavior mismatching the target driving behavior, the target vehicle to travel in accordance with a traffic parameter of the target driving behavior.

In the present embodiment, specific processing of the parameter acquiring module 501, the result obtaining module 502, the behavior determining module 503, and the travel control module 504 of the apparatus 500 for controlling a vehicle and the technical effects thereof may be referred to the related description of steps 201 to 204 in the corresponding embodiment of Fig. 2, respectively, and are not repeated here.

In some alternative implementations of the present embodiment, the behavior determining module 503 is further configured to: determine a relative traffic parameter based on the traffic parameter of the target vehicle and the traffic parameters of the other vehicles; and then determine the target driving behavior based on the traffic parameter of the target vehicle and the relative traffic parameter.

In some alternative implementations of the present embodiment, the travel control module 504 is further configured to: control, in response to the predicted behavior matching the target driving behavior, the target vehicle to travel in accordance with the traffic parameter of the predicted behavior.

In some alternative implementations of the present embodiment, the apparatus 500 for controlling a vehicle further includes: a message generating module configured to generate a corresponding reminding message based on a matching result.

In some alternative implementations of the present embodiment, the message generating module is further configured to execute any one of: generating, in response to the matching result being that the predicted behavior mismatches the target driving behavior, a corresponding first reminding message, where the first reminding message is used for reminding adjustment of the traffic parameter of the target vehicle to the traffic parameter of the target driving behavior; or generating, in response to the matching result being that the predicted behavior matches the target driving behavior, a corresponding second reminding message, where the second reminding message is used for reminding adjustment of the traffic parameter of the target vehicle to the traffic parameter of the predicted behavior.

In some alternative implementations of the present embodiment, the apparatus 500 for controlling a vehicle further includes: a threshold acquiring module configured to acquire, in response to the target driving behavior being a driving behavior of braking, a preset braking time threshold; and a braking control module configured to control, in response to an estimated duration of executing the driving behavior of braking being less than the preset braking time threshold, the target vehicle to be forced to brake, where there is a corresponding relationship between the estimated duration of executing the driving behavior of braking and the traffic parameter of the target driving behavior.

In some alternative implementations of the present embodiment, the apparatus 500 for controlling a vehicle further includes: a message sending module configured to send the reminding messages to the other vehicles and the target vehicle in accordance with a pre-established communication mode.

According to an embodiment of the present disclosure, the present disclosure further provides an electronic device, a readable storage medium, and a computer program product.

Fig. 6 shows a schematic block diagram of an example electronic device 600 that may be configured to implement embodiments of the present disclosure. The electronic device is intended to represent various forms of digital computers, such as a laptop computer, a desktop computer, a workbench, a personal digital assistant, a server, a blade server, a mainframe computer, and other suitable computers. The electronic device may alternatively represent various forms of mobile apparatuses, such as a personal digital assistant, a cellular phone, a smart phone, a wearable device, and other similar computing apparatuses. The components shown herein, the connections and relationships thereof, and the functions thereof are used as examples only, and are not intended to limit implementations of the present disclosure described and/or claimed herein.

As shown in Fig. 6, the device 600 includes a computing unit 601, which may execute various appropriate actions and processes in accordance with a computer program stored in a read-only memory (ROM) 602 or a computer program loaded into a random access memory (RAM) 603 from a storage unit 608. The RAM 603 may further store various programs and data required by operations of the device 600. The computing unit 601, the ROM 602, and the RAM 603 are connected to each other through a bus 604. An input/output (I/O) interface 605 is also connected to the bus 604.

A plurality of components in the device 600 is connected to the I/O interface 605, including: an input unit 606, such as a keyboard and a mouse; an output unit 607, such as various types of displays and speakers; a storage unit 608, such as a magnetic disk and an optical disk; and a communication unit 609, such as a network card, a modem, and a wireless communication transceiver. The communication unit 609 allows the device 600 to exchange information/data with other devices through a computer network such as the Internet and/or various telecommunication networks.

The computing unit 601 may be various general purpose and/or specific purpose processing components having a processing capability and a computing capability. Some examples of the computing unit 601 include, but are not limited to, a central processing unit (CPU), a graphics processing unit (GPU), various specific purpose artificial intelligence (AI) computing chips, various computing units running a machine learning model algorithm, a digital signal processor (DSP), and any appropriate processor, controller, micro-controller, and the like. The computing unit 601 executes various methods and processes described above, such as the method for controlling a vehicle. For example, in some embodiments, the method for controlling a vehicle may be implemented as a computer software program that is tangibly included in a machine readable medium, such as the storage unit 608. In some embodiments, some or all of the computer programs may be loaded and/or installed onto the device 600 via the ROM 602 and/or the communication unit 609. When the computer program is loaded into the RAM 603 and executed by the computing unit 601, one or more steps of the method for controlling a vehicle described above may be executed. Alternatively, in other embodiments, the computing unit 601 may be configured to execute the method for controlling a vehicle by any other appropriate approach (e.g., by means of firmware).

Various implementations of the systems and technologies described above herein may be implemented in a digital electronic circuit system, an integrated circuit system, a field programmable gate array (FPGA), an application specific integrated circuit (ASIC), an application specific standard product (ASSP), a system on a chip (SOC), a complex programmable logic device (CPLD), computer hardware, firmware, software, and/or a combination thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input apparatus and at least one output apparatus, and send the data and instructions to the storage system, the at least one input apparatus and the at least one output apparatus.

Program codes for implementing the method of the present disclosure may be compiled using any combination of one or more programming languages. The program codes may be provided to a processor or controller of a general purpose computer, a specific purpose computer, or other programmable apparatuses for data processing, such that the program codes, when executed by the processor or controller, cause the functions/operations specified in the flowcharts and/or block diagrams to be implemented. The program codes may be completely executed on a machine, partially executed on a machine, partially executed on a machine and partially executed on a remote machine as a separate software package, or completely executed on a remote machine or server.

In the context of the present disclosure, a machine readable medium may be a tangible medium which may contain or store a program for use by, or used in combination with, an instruction execution system, apparatus or device. The machine readable medium may be a machine readable signal medium or a machine readable storage medium. The computer readable medium may include, but is not limited to, electronic, magnetic, optical, electromagnetic, infrared, or semiconductor systems, apparatuses, or devices, or any appropriate combination of the above. A more specific example of the machine readable storage medium will include an electrical connection based on one or more pieces of wire, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any appropriate combination of the above.

To provide interaction with a user, the systems and technologies described herein may be implemented on a computer that is provided with: a display apparatus (e.g., a CRT (cathode ray tube) or an LCD (liquid crystal display) monitor) configured to display information to the user; and a keyboard and a pointing apparatus (e.g., a mouse or a trackball) by which the user can provide an input to the computer. Other kinds of apparatuses may also be configured to provide interaction with the user. For example, feedback provided to the user may be any form of sensory feedback (e.g., visual feedback, auditory feedback, or tactile feedback); and an input may be received from the user in any form (including an acoustic input, a voice input, or a tactile input).

The systems and technologies described herein may be implemented in a computing system that includes a back-end component (e.g., as a data server), or a computing system that includes a middleware component (e.g., an application server), or a computing system that includes a front-end component (e.g., a user computer with a graphical user interface or a web browser through which the user can interact with an implementation of the systems and technologies described herein), or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and generally interact with each other through a communication network. The relationship between the client and the server is generated by virtue of computer programs that run on corresponding computers and have a client-server relationship with each other.

Artificial intelligence is a subject of studying computers to simulate some human thinking processes and intelligent behaviors (such as learning, reasoning, thinking, and planning), and includes both hardware technologies and software technologies. The hardware technologies of artificial intelligence generally include technologies, such as sensors, dedicated artificial intelligence chips, cloud computing, distributed storage, and big data processing; and the software technologies of artificial intelligence mainly include several major directions, such as a computer vision technology, a speech recognition technology, a natural speech processing technology, machine learning/deep learning, a big data processing technology, and a knowledge graph technology.

It should be understood that the various forms of processes shown above may be used to reorder, add, or delete steps. For example, the steps disclosed in the present disclosure may be executed in parallel, sequentially, or in different orders, as long as the desired results of the technical solutions mentioned in the present disclosure can be implemented. This is not limited herein.

The above specific implementations do not constitute any limitation to the scope of protection of the present disclosure. It should be understood by those skilled in the art that various modifications, combinations, sub-combinations, and replacements may be made according to the design requirements and other factors. Any modification, equivalent replacement, improvement, and the like made within the spirit and principle of the present disclosure should be encompassed within the scope of protection of the present disclosure.

## Claims

1. A method for controlling a vehicle, comprising:
acquiring (201) a traffic parameter of a target vehicle and traffic parameters of other vehicles;
inputting (202) the traffic parameter of the target vehicle into a pre-trained behavior predicting model to obtain a predicted behavior;
determining (203) a matching target driving behavior based on the traffic parameter of the target vehicle and the traffic parameters of the other vehicles; and
controlling (204), in response to the predicted behavior mismatching the target driving behavior, the target vehicle to travel in accordance with a traffic parameter of the target driving behavior.

2. The method according to claim 1, wherein the determining the matching target driving behavior based on the traffic parameter of the target vehicle and the traffic parameters of the other vehicles comprises:
determining (303) a relative traffic parameter based on the traffic parameter of the target vehicle and the traffic parameters of the other vehicles; and
determining (304) the target driving behavior based on the traffic parameter of the target vehicle and the relative traffic parameter.

3. The method according to claim 1 or 2, wherein the method further comprises:
controlling, in response to the predicted behavior matching the target driving behavior, the target vehicle to travel in accordance with a traffic parameter of the predicted behavior.

4. The method according to any one of claims 1 to 3, wherein the method further comprises:
generating a corresponding reminding message based on a matching result.

5. The method according to claim 4, wherein the generating the corresponding reminding message based on the matching result comprises any one of:
generating (405), in response to the matching result being that the predicted behavior mismatches the target driving behavior, a corresponding first reminding message, wherein the first reminding message is used for reminding adjustment of the traffic parameter of the target vehicle to the traffic parameter of the target driving behavior; or
generating (406), in response to the matching result being that the predicted behavior matches the target driving behavior, a corresponding second reminding message, wherein the second reminding message is used for reminding adjustment of the traffic parameter of the target vehicle to the traffic parameter of the predicted behavior.

6. The method according to any one of claims 1 to 5, wherein the method further comprises:
acquiring, in response to the target driving behavior being a driving behavior of braking, a preset braking time threshold; and
controlling, in response to an estimated duration of executing the driving behavior of braking being less than the preset braking time threshold, the target vehicle to be forced to brake, wherein there is a corresponding relationship between the estimated duration of executing the driving behavior of braking and the traffic parameter of the target driving behavior.

7. The method according to any one of claims 4-6, wherein the method further comprises:
sending the reminding message to the other vehicles and the target vehicle in accordance with a pre-established communication mode.

8. An apparatus for controlling a vehicle, comprising:
a parameter acquiring module (501) configured to acquire a traffic parameter of a target vehicle and traffic parameters of other vehicles;
a result obtaining module (502) configured to input the traffic parameter of the target vehicle into a pre-trained behavior predicting model to obtain a predicted behavior;
a behavior determining module (503) configured to determine a matching target driving behavior based on the traffic parameter of the target vehicle and the traffic parameters of the other vehicles; and
a travel control module (504) configured to control, in response to the predicted behavior mismatching the target driving behavior, the target vehicle to travel in accordance with a traffic parameter of the target driving behavior.

9. The apparatus according to claim 8, wherein the behavior determining module is further configured to:
determine a relative traffic parameter based on the traffic parameter of the target vehicle and the traffic parameters of the other vehicles; and
determine the target driving behavior based on the traffic parameter of the target vehicle and the relative traffic parameter.

10. The apparatus according to claim 8 or 9, wherein the travel control module is further configured to: control, in response to the predicted behavior matching the target driving behavior, the target vehicle to travel in accordance with a traffic parameter of the predicted behavior.

11. The apparatus according to any one of claims 8 to 10, wherein the apparatus further comprises:
a message generating module configured to generate a corresponding reminding message based on a matching result.

12. The apparatus according to claim 11, wherein the message generating module is further configured to execute any one of:
generating, in response to the matching result being that the predicted behavior mismatches the target driving behavior, a corresponding first reminding message, wherein the first reminding message is used for reminding adjustment of the traffic parameter of the target vehicle to the traffic parameter of the target driving behavior; or
generating, in response to the matching result being that the predicted behavior matches the target driving behavior, a corresponding second reminding message, wherein the second reminding message is used for reminding adjustment of the traffic parameter of the target vehicle to the traffic parameter of the predicted behavior.

13. The apparatus according to any one of claims 8 to 12, wherein the apparatus further comprises:
a threshold acquiring module configured to acquire, in response to the target driving behavior being a driving behavior of braking, a preset braking time threshold; and
a braking control module configured to control, in response to an estimated duration of executing the driving behavior of braking being less than the preset braking time threshold, the target vehicle to be forced to brake, wherein there is a corresponding relationship between the estimated duration of executing the driving behavior of braking and the traffic parameter of the target driving behavior.

14. A non-transitory computer-readable storage medium storing computer instructions, wherein the computer instructions cause a computer to execute the method according to any one of claims 1 to 7.

15. A computer program product, comprising a computer program, wherein the computer program, when executed by a processor, implements the method according to any one of claims 1 to 7 .
